# EUROPEAN PATENT APPLICATION

(11) **EP 4 842 038 A1**
(43) Date of publication of application: **18.11.2026**
(21) Application number: 24916204.1
(22) Date of filing: 01.03.2024
(51) Int. Cl.: H04W 24/02, H04W 8/14, H04W 8/22

(54) **COMMUNICATION METHOD, DEVICE, AND STORAGE MEDIUM**

(30) Priority: 12.01.2024 CN 202410053503
(71) Applicant: Beijing Xiaomi Mobile Software Co., Ltd., Beijing 100085 (CN)
(72) Inventor: LI, Mingju, Beijing 100085 (CN); CHEN, Bo, Beijing 100085 (CN)
(74) Representative: Pfitzner, Hannes
(86) International application number: PCT/CN2024/079752
(87) International publication number: WO 2025/148143

(57) **Abstract**

Embodiments of the present application relate to a communication method, a device, and a storage medium. The method comprises: receiving first information sent by a network device; determining an application range of the first information; and determining a first function on the basis of the application range, wherein the application range comprises one or more cells, the first information is information corresponding to the first function, the first function is used for performing beam prediction, and the first function is an artificial intelligence (AI) model and/or an AI function. In this way, the application range of the first information can be flexibly determined, and the management efficiency of the first function is improved.

## Description

### CROSS-REFERENCE TO RELATED APPLICATIONS

This application claims the priority of the Chinese patent application No. 202410053503.9 and titled "COMMUNICATION METHOD, DEVICE, AND STORAGE MEDIUM" filed to the China National Intellectual Property Administration on January 12, 2024, the entire content of which is incorporated herein by reference.

### TECHNICAL FIELD

The disclosure relates to the field of communication technologies, and in particular to a communication method, a device, and a storage medium.

### BACKGROUND

With the advancement of communication technologies, an artificial intelligence (AI)-based prediction function has been introduced into wireless communication systems, in which the prediction function may be an AI function and/or an AI model. With the prediction function, prediction data in certain scenarios may be obtained, thus improving network performance.

### SUMMARY

Embodiments of the disclosure provide a communication method, a device, and a storage medium.

According to a first aspect of the embodiments of the disclosure, a communication method is provided. The method is performed by a terminal, including:
receiving first information sent by a network device, in which the first information is information corresponding to a first function, the first function is configured to perform beam prediction, and the first function is an artificial intelligence (AI) model and/or an AI function;
determining an application scope of the first information, in which the application scope includes one or more cells; and
determining the first function based on the application scope.

According to a second aspect of the embodiments of the disclosure, a communication method is provided. The method is performed by a network device, including:
sending first information to a terminal, in which the first information is information corresponding to a first function, the first function is configured to perform beam prediction, and the first function is an AI model and/or an AI function, the terminal determines an application scope of the first information, and determines the first function based on the application scope, the application scope including one or more cells.

According to a third aspect of the embodiments of the disclosure, a terminal is provided. The terminal includes:
a first transceiver module, configured to receive first information sent by a network device; in which the first information is information corresponding to a first function, the first function is configured to perform beam prediction, and the first function is an AI model and/or an AI function; and
a first processing module, configured to determine an application scope of the first information, the application scope including one or more cells; and determine the first function based on the application scope.

According to a fourth aspect of the embodiments of the disclosure, a network device is provided. The network device includes:
a second transceiver module, configured to send first information to a terminal, in which the first information is information corresponding to a first function, the first function is configured to perform beam prediction, and the first function is an AI model and/or an AI function, the terminal determines an application scope of the first information, and determines the first function based on the application scope, the application scope including one or more cells.

According to a fifth aspect of the embodiments of the disclosure, a communication device is provided. The communication device includes: one or more processors, in which the communication device is configured to perform an optional implementation of the first aspect or the second aspect.

According to a sixth aspect of the embodiments of the disclosure, a storage medium is provided. The storage medium stores instructions that, when run on a communication device, cause the communication device to implement the method described in an optional implementation of the first aspect or the second aspect.

According to a seventh aspect of the embodiments of the disclosure, a communication system is provided. The communication system may include: a terminal, configured to implement the method described in an optional implementation of the first aspect, and a network device, configured to implement the method described in an optional implementation of the second aspect.

The technical solutions provided in the embodiments of the disclosure may include the following beneficial effects. The first information sent by the network device is received, the application scope of the first information is determined, and the first function is determined based on the application scope, in which the application scope includes one or more cells, the first information is information corresponding to the first function, the first function is configured to perform beam prediction, and the first function is the AI model and/or the AI function. Thus, the application scope of the first information may be flexibly determined, and the management efficiency of the first function may be improved.

It should be understood that the above general description and the following detailed description are only exemplary and explanatory, and do not limit the embodiments of the disclosure.

### BRIEF DESCRIPTION OF THE DRAWINGS

In order to more clearly illustrate technical solutions in the embodiments of the disclosure, the accompanying drawings required for describing the embodiments are introduced below. The following accompanying drawings are merely some embodiments of the disclosure and do not specifically limit the scope of protection of the disclosure.
FIG. 1 is a schematic diagram illustrating an architecture of a communication system according to an embodiment of the disclosure.
FIG. 2 is an interaction diagrams illustrating a communication method according to an embodiment of the disclosure.
FIG. 3 is a schematic diagram illustrating a first pattern according to an embodiment of the disclosure.
FIG. 4 is a schematic diagram illustrating a second pattern according to an embodiment of the disclosure.
FIG. 5 is a flowchart illustrating a communication method according to an embodiment of the disclosure.
FIG. 6 is a flowchart illustrating a communication method according to an embodiment of the disclosure.
FIG. 7 is a flowchart illustrating a communication method according to an embodiment of the disclosure.
FIG. 8 is a flowchart illustrating a communication method according to an embodiment of the disclosure.
FIG. 9 is a block diagram illustrating a terminal according to an embodiment of the disclosure.
FIG. 10 is a block diagram illustrating a network device according to an embodiment of the disclosure.
FIG. 11 is a block diagram illustrating a communication device according to an embodiment of the disclosure.

### DETAILED DESCRIPTION

The embodiments of the disclosure provide a communication method, a device, and a storage medium.

In a first aspect, embodiments of the disclosure provide a communication method. The method includes:
receiving first information; in which the first information is information corresponding to a first function, the first function is configured to perform beam prediction, and the first function is an artificial intelligence (AI) model and/or an AI function; and
determining an application scope of the first information.

In the above embodiments, the terminal may determine the application scope of the first information, and may determine information required by the first function based on the first information within the application scope, thus flexibly determining the application scope of the first information and improving the management efficiency of the first function.

In combination with some embodiments of the first aspect, in some embodiments, the application scope includes one or more cells, and the method further includes:
determining the first function based on the application scope.

In combination with some embodiments of the first aspect, in some embodiments, determining the application scope of the first information includes at least one of:
determining the application scope of the first information based on an indication parameter in the first information;
determining the application scope of the first information based on an indication parameter in second information, in which the second information is information received by the terminal from a network device and different from the first information; or
determining the application scope of the first information based on a first rule, in which the first rule is a rule followed by the terminal and the network device.

In the above embodiments, the terminal may determine the application scope of the first information according to any one of the above items, and may flexibly manage the application scope of the first information.

In combination with some embodiments of the first aspect, in some embodiments, the application scope of the first information is a first scope, and the terminal determines to, based on the first scope, apply the first information in a first cell, the first cell being a cell in which the terminal receives the first information.

In the above embodiments, the application scope of the first information may be determined as the first cell, thus limiting the application scope of the first information and improving reliability.

In combination with some embodiments of the first aspect, in some embodiments, the application scope of the first information is a second scope, and the terminal determines to, based on the second scope, apply the first information in one or more second cells,

in which the second cell is any cell accessible to the terminal, or the second cell is a cell that sends a first identifier (ID), in which the first ID corresponds to the first function.

In the above embodiments, the application scope of the first information may be determined as a plurality of cells, and the application scope of the first information may be increased, thus more flexibly managing the first information and the first function.

In combination with some embodiments of the first aspect, in some embodiments, the application scope of the first information is a third scope, the third scope includes a plurality of cells, and the terminal determines to apply the first information in the plurality of cells within the third scope.

In the above embodiments, the application scope of the first information may be determined as the plurality of cells within the third scope, and the application scope of the first information may be increased, thus flexibly managing the application scope of the first information and improving reliability.

In combination with some embodiments of the first aspect, in some embodiments, the first information includes at least one of:
a first ID, in which the first ID corresponds to the first function;
a second ID, in which the second ID corresponds to a measurement-related configuration, and the measurement is configured for data collection;
beam information, in which the beam information indicates beam-related information for measurement and/or prediction;
a use case, in which the use case is a case in which the first function is applied to perform beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates coverage-related information of the network device;
terminal distribution information, in which the terminal distribution information indicates a distribution of a plurality of terminals within a coverage area of the network device;
a data collection purpose, in which the data collection purpose indicates a purpose of data obtained via the first information; or
measurement information, in which the measurement information includes relevant information for the terminal to perform measurement based on the first information.

In the above embodiments, the information required by the first function may be determined via any one of the above items, thus improving the flexibility of the terminal and/or the network device in managing the first function.

In combination with some embodiments of the first aspect, in some embodiments, the use case includes at least one of:
a spatial-domain beam prediction case;
a time-domain beam prediction case; or
a spatial-domain beam prediction case and a time-domain beam prediction case.

In the above embodiments, the use case may control the first information to be applied to a spatial-domain and/or time-domain beam prediction case, thus better adapting to different scenarios.

In combination with some embodiments of the first aspect, in some embodiments, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between the first reference signal resource set and the second reference signal resource set;
time information corresponding to the first reference signal resource set;
time information corresponding to the second reference signal resource set; or
a time pattern, in which the time pattern is a pattern of time corresponding to the first reference signal resource set and time corresponding to the second reference signal resource set.

In the above embodiments, the reference signal resource information related to the first function may be flexibly determined.

In combination with some embodiments of the first aspect, in some embodiments, the data collection purpose includes at least one of:
model training;
model inference; or
performance monitoring.

In combination with some embodiments of the first aspect, in some embodiments, the first information corresponding to different data collection purposes have different content.

In the above embodiments, the data collection purpose may be flexibly indicated, so that the terminal determines the data collection purpose and flexibly obtains corresponding data based on the data collection purpose.

In combination with some embodiments of the first aspect, in some embodiments, the first ID includes at least one of:
a function ID;
a model ID;
a dataset ID;
a data collection configuration ID;
a data collection ID;
a condition ID; or
an additional condition ID.

In combination with some embodiments of the first aspect, in some embodiments, when at least one of the first IDs is the same, the first information corresponds to the same first function.

In the above embodiments, the first ID may be flexibly indicated, so that the terminal determines the first function corresponding to the first information based on the first ID.

In a second aspect, embodiments of the disclosure provide a communication method. The method includes:

sending first information to a terminal, in which the first information is information corresponding to a first function, the first function is configured to perform beam prediction, and the first function is an AI model and/or an AI function, the terminal determines an application scope of the first information, and determines the first function based on the application scope, the application scope including one or more cells.

In the above embodiments, the terminal may determine the application scope of the first information, and may determine information required by the first function based on the first information within the application scope, thus flexibly determining the application scope of the first information and improving the management efficiency of the first function.

In combination with some embodiments of the second aspect, in some embodiments, the method further includes at least one of:
carrying an indication parameter in the first information, in which the indication parameter indicates the application scope of the first information;
sending second information to the terminal, in which the second information is used to instruct the terminal to determine the application scope of the first information; or
determining the application scope of the first information based on a first rule, in which the first rule is a rule followed by the terminal and the network device.

In combination with some embodiments of the second aspect, in some embodiments,
the application scope of the first information is a first scope, the first scope includes a first cell, and the first cell is a cell in which the terminal receives the first information.

In combination with some embodiments of the second aspect, in some embodiments,
the application scope of the first information is a second scope, and the second scope includes one or more second cells,
in which the second cell is any cell accessible to the terminal, or the second cell is a cell that sends a first ID, in which the first ID corresponds to the first function.

In combination with some embodiments of the second aspect, in some embodiments,
the application scope of the first information is a third scope, the third scope includes a plurality of cells, and the plurality of cells are indicated by an indication parameter carried in the first information or by the second information.

In combination with some embodiments of the second aspect, in some embodiments, the method further includes:
sending third information to another network device, in which the third information indicates a correspondence between the first function and the first information; and/or
receiving the third information sent by another network device.

In combination with some embodiments of the second aspect, in some embodiments, the first information includes at least one of:
a first ID, in which the first ID corresponds to the first function;
a second ID, in which the second ID corresponds to a measurement-related configuration, and the measurement is configured for data collection;
beam information, in which the beam information indicates beam-related information for measurement and/or prediction;
a use case, in which the use case is a case of applying the first function to perform beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates coverage-related information of the network device;
terminal distribution information, in which the terminal distribution information indicates a distribution of a plurality of terminals within a coverage area of the network device;
a data collection purpose, in which the data collection purpose indicates a purpose of data obtained via the first information; or
measurement information, in which the measurement information includes relevant information for the terminal to perform measurement based on the first information.

In combination with some embodiments of the second aspect, in some embodiments, the use case includes at least one of:
a spatial-domain beam prediction case;
a time-domain beam prediction case; or
a spatial-domain beam prediction case and a time-domain beam prediction case.

In combination with some embodiments of the second aspect, in some embodiments, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between the first reference signal resource set and the second reference signal resource set;
time information corresponding to the first reference signal resource set;
time information corresponding to the second reference signal resource set; or
a time pattern, in which the time pattern is a pattern of time corresponding to the first reference signal resource set and time corresponding to the second reference signal resource set.

In combination with some embodiments of the second aspect, in some embodiments, the data collection purpose includes at least one of:
model training;
model inference; or
performance monitoring.

In combination with some embodiments of the second aspect, in some embodiments, the first ID includes at least one of:
a function ID;
a model ID;
a dataset ID;
a data collection configuration ID;
a data collection ID;
a condition ID; or
an additional condition ID.

In a third aspect, embodiments of the disclosure provide a terminal. The terminal may include at least one of a transceiver module or a processing module, in which the terminal may be configured to perform an optional implementation of the first aspect.

In a fourth aspect, embodiments of the disclosure provide a network device. The network device may include at least one of a transceiver module or a processing module, in which the network device may be configured to perform an optional implementation of the second aspect.

In a fifth aspect, embodiments of the disclosure provide a communication device. The communication device may include: one or more processors, in which the communication device may be configured to perform an optional implementation of the first aspect or the second aspect.

In a sixth aspect, embodiments of the disclosure provide a storage medium. The storage medium stores instructions which, when executed on a communication device, cause the communication device to implement the method described in an optional implementation of the first aspect or the second aspect.

In a seventh aspect, embodiments of the disclosure provide a program product. The program product, when executed by a communication device, causes the communication device to implement the method described in an optional implementation of the first aspect or the second aspect.

In an eighth aspect, embodiments of the disclosure provide a computer program. When the computer program is running on a computer, the computer is caused to implement the method described in an optional implementation of the first aspect or the second aspect.

In a ninth aspect, embodiments of the disclosure provide a chip or a chip system. The chip or the chip system includes a processing circuit, configured to perform the method described in an optional implementation of the first aspect or the second aspect.

In a tenth aspect, embodiments of the disclosure provide a communication system. The communication system may include: a terminal, configured to implement the method described in an optional implementation of the first aspect, and a network device, configured to implement the method described in an optional implementation of the second aspect.

It may be understood that the terminal, the network device, the communication device, the communication system, the storage medium, the program product, the computer program, and the chip or chip system may all be used to implement the method in the embodiments of the disclosure. Thus, regarding beneficial effects they may achieve, reference may be made to the beneficial effects in the corresponding methods, which are not repeated herein.

The embodiments of the disclosure provide a communication method, a device, and a storage medium. In some embodiments, the terms such as communication method and method for information processing may be interchangeable; the terms such as communication apparatus, apparatus for information processing, and communication device may be interchangeable; and the terms such as system or information processing and communication system may be interchangeable.

The embodiments of the disclosure are not exhaustive, but are only illustrative, and are not intended to be a specific limitation on the protection scope of the disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, the embodiments may be arbitrarily combined, for example, some or all steps of different embodiments may be arbitrarily combined, and a certain embodiment may be arbitrarily combined with optional implementations of other embodiments.

In the embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., a network device, an access network device, a core network device, etc.) included in the network.

In some embodiments, the network device may include at least one of an access network device or a core network device.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "sidelink"). For example, the uplink channel, the downlink channel, etc. may be replaced with the side link channel or direct link channel, and the uplink, the downlink, etc. may be replaced with sidelink or direct link.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country from which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

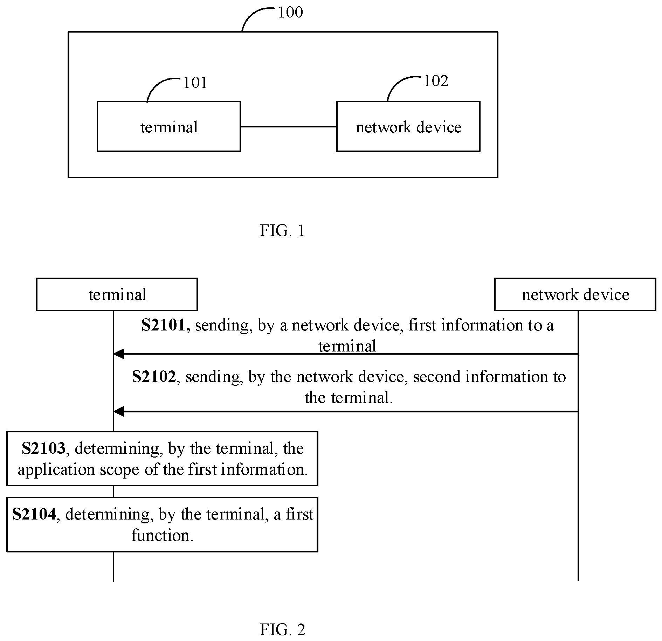

FIG. 1 is a schematic diagram illustrating an architecture of a communication system according to an embodiment of the disclosure. As shown in FIG. 1, the communication system 100 may include a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a road side unit (RUS), a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device includes at least one of: the access network device, or the core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, interfaces between or within the access network devices involved in the embodiments of the disclosure may become internal interfaces of the Open RAN, and processes and information interactions between these internal interfaces may be implemented through software or programs.

In some embodiments, the access network device may consist of a central unit (CU) and distributed units (DUs), in which the CU may also be called a control unit. A protocol layer of the access network device may be divided by adopting a CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device may be one device, or may be a plurality of devices or a device group. The core network may include at least one of an evolved packet core (EPC), a 5G core network (5GCN), or a next generation core (NGC).

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM^{®}), CDMA2000, ultra mobile broadband (UMB), IEEE 802.11 (Wi-Fi^{®}), IEEE 802.16 (WiMAX^{®}), IEEE 802.20, Ultra-WideBand (UWB), Bluetooth^{®}, a public land mobile network (PLMN) network, a device-to-device (D2D) system, a machine-to-machine (M2M) system, an IoT system, vehicle-to-everything (V2X), systems using other communication methods, and next-generation systems based on them. In addition, the plurality of systems may also be combined (for example, a combination of LTE or LTE-A and 5G, etc.) for application.

In some embodiments of the disclosure, the communication system may support beam-based transmission and reception. The beam-based transmission and reception may better direct a useful signal toward a corresponding terminal, and also avoid leakage of signal energy causing interference to other terminals, thus improving a signal to interference plus noise ratio and enhancing coverage performance of a wireless communication system.

For example, in a communication system, such as in NR communication, for a frequency range 2 (FR2) communication band, since attenuation of a high-frequency channel is relatively fast, beam-based transmission and reception may be used to ensure coverage.

In some embodiments, the network device may configure a reference signal resource set for beam measurement, the terminal may measure reference signal resources in the reference signal resource set, and report IDs of X reference signal resources with relatively strong signal quality in a measurement result, and a layer 1 reference signal received power (L1-RSRP) and/or a layer 1 signal to interference plus noise ratio (L1-SINR) of each reference signal resource in the X reference signal resources. The reference signal resource set configured by the network device includes X reference signal resources, each reference signal resource corresponds to a different transmit beam of the network device. For each reference signal resource, the terminal needs to measure the reference signal resource via all receive beams, determine a beam measurement quality corresponding to each receive beam, and determine the strongest beam measurement quality from a plurality of beam measurement qualities. In the measurement process, if a number of transmit beams of the network device is M and a number of receive beams of the terminal is N, a number of beam pairs that the terminal needs to measure is M*N.

In some embodiments, the terms such as "beam", "beam pair", "beam width", "beam angular degree", "antenna", "antenna element", "antenna port", "antenna port group", "panel", "layer", "the number of layers", "rank", "resource", "resource set", "resource group", "quasi-colocation (QCL) Type D", "spatial setting", "spatial filter", "spatial relation info", "spatial RX parameters", "spatial Tx parameter", and "transmission configuration indication (TCI) state" and the like may be used interchangeable.

In some embodiments of the disclosure, the communication system may support a first function. The first function may be configured to perform beam prediction. For example, the first function may be a prediction function configured to perform beam prediction.

In some embodiments, the first function may be an AI function and/or an AI model.

In some embodiments, one AI function may correspond to one or more AI models. For example, one AI function may be a function or a module jointly implemented by a plurality of AI models. Different AI models may correspond to different conditions or additional conditions.

In other embodiments, one AI model may correspond to one or more AI functions.

In other embodiments, the AI function and the AI model may correspond one-to-one.

In some embodiments, the first function may be deployed on the terminal and/or the network device.

In some embodiments, the name of the first function is not limited, and may be, for example, "AI function", "AI model", "AI module", "prediction function", "prediction model", "prediction module", etc.

In some embodiments, the terminal and/or the network device may perform beam prediction based on the first function. For example, the number of beam pairs that the terminal originally needs to measure is M*N (in which M is a number of transmit beams of a base station, and N is the number of receive beams of the terminal). Based on the first function, the number of beam pairs measured by the terminal may be reduced, but beam information of M*N beam pairs (for example, information such as beam quality and an best beam) may still be predicted and output based on the first function.

For example, for spatial-domain beam prediction, the terminal may measure only a part of a plurality of beam pairs. For example, the beam pairs measured by the terminal may be 1/8, 1/4, and the like of the M*N beam pairs, beam measurement qualities of the measured partial beam pairs are used as input values of the first function, corresponding output values may be predicted via the first function. The output values may be beam information of the M*N beam pairs, such as beam quality of at least one beam pair, and/or IDs of best K beam pairs. The beam measurement quality may include L1-RSRP and/or L1-SINR. The beam pair ID may be a TxRx beam ID, and the Tx beam ID may be a reference signal resource ID.

In some embodiments, the terminal and/or the network device may perform beam prediction based on the first function. For example, the number of transmit beams of the base station that the terminal originally needs to measure is M, based on the first function, the number of transmit beams of the base station measured by the terminal may be reduced, but beam information of M transmit beams of the base station (for example, information such as beam quality and an best beam) may still be predicted and output based on the first function.

For example, for spatial-domain beam prediction, the terminal may measure only a part of a plurality of transmit beams of a base station. For example, the beams measured by the terminal may be 1/8, 1/4, and the like of the M beams, beam measurement qualities of the measured partial beams are used as input values of the first function, corresponding output values may be predicted via the first function. The output values may be beam information of the M transmit beams, such as beam quality of at least one beam, and/or IDs of best K beams. The beam measurement quality may include L1-RSRP and/or L1-SINR. The beam ID may be a Tx beam ID, and the Tx beam ID may be a reference signal resource ID.

As another example, for time-domain beam prediction, the terminal may measure beam qualities of beam pairs and/or transmit beams at historical time instances to obtain historical beam measurement qualities, the historical beam measurement qualities are used as input values of the first function, corresponding output values are predicted via the first function, and the output values may be beam information (e.g., information such as beam quality and best beam(s)) of beam pairs or transmit beams of the base station at future time instances. The beam measurement quality may include L1-RSRP and/or L1-SINR. The best beam(s) may include an ID of best beam pair(s), an ID of a beam pair may be a TxRx beam ID, and the Tx beam ID may be an ID of a reference signal resource. The best beam(s) may include the ID of the best beam(s), and an ID of a beam may be an ID of a reference signal resource. The transmit beam may be a transmit beam sent from the base station to the terminal.

In some embodiments, beam sets of the terminal may include a first beam set setB, and a second beam set setA.

The first beam set setB includes one or more first beams, and the first beam may be a beam corresponding to an input value of the first function. For example, the terminal may obtain beam measurement qualities by measuring the first beams in the first beam set setB.

The second beam set setA includes one or more second beams, and the second beams may be beams corresponding to an output value of the first function.

In some embodiments, for spatial-domain beam prediction, the first function may predict measurement results of the second beams in the second beam set setA based on measurement results of the first beams in the first beam set setB. For example, the terminal may measure L1-RSRP and/or L1-SINR of the first beams in the setB, input the measured L1-RSRP and/or L1-SINR into the first function, and the first function may predict and output L1-RSRP and/or L1-SINR of the second beams in the setA.

For spatial-domain beam prediction, a relationship between the first beam set setB and the second beam set setA may include at least one of:
the setB may be a subset of the setA; for example, the setA includes 32 reference signal resources (each reference signal resource corresponds to a beam direction), the setB includes N reference signal resources, in which N < 32, for example, N = 8; or
the setB is different from the setA, beams corresponding to the setB are wide beams, and beams corresponding to the setA are narrow beams. Optionally, beam coverage ranges of the setB and the setA may be the same or different. For example, the setA includes 32 reference signal resources, each reference signal resource corresponds to a beam direction, a range covered by the 32 reference signal resources is 120 degrees, the setB includes N reference signal resources, for example, N = 8, and a range covered by the N reference signal resources is also 120 degrees, that is, beam directions of a plurality of reference signal resources in the setB cover beam directions of a plurality of reference signal resources in the setA, and it may also be understood that 32/N reference signal resources in the setA and the same reference signal resource in the setB are in a QCL Type D relationship.

In some embodiments, for time-domain beam prediction, the first function may predict measurement results of the second beams in the second beam set setA at future time instances based on measurement results of the first beam in the first beam set setB at historical time instances. For example, the terminal may measure L1-RSRP and/or L1-SINR of the first beams in the setB at historical time instances, input the measured L1-RSRP and/or L1-SINR into the first function, and the first function may predict and output L1-RSRP and/or L1-SINR of the second beams in the setA at future time instances.

For time-domain beam prediction, a relationship between the first beam set setB and the second beam set setA may include at least one of:
the setB may be a subset of the setA;
the setB is different from the setA, beams corresponding to the setB are wide beams, and beams corresponding to the setA are narrow beams; or
the setB is the same as the setA.

In some embodiments, in order to manage the first function, when the terminal moves between different cells, first information of different cells may be configured independently, or may be configured identically across a plurality of cells. How to determine an application scope of the first information becomes an urgent problem to be solved.

FIG. 2 is an interaction diagram illustrating a communication method according to an embodiment of the disclosure. The method may be performed by the communication system. As shown in FIG. 2, the method may include the following steps S2101 to S2104.

At step S2101, a network device sends first information to a terminal.

In some embodiments, the terminal may receive the first information. For example, the terminal may receive the first information sent by the network device.

In some embodiments, the first information may be information corresponding to a first function. For example, the first information may indicate information required by the first function, the first function may be configured to perform beam prediction, and the first function may be an AI model and/or an AI function.

In some embodiments, the name of the first information is not limited, and may be, for example, "configuration information", "data configuration information", "function configuration information", "model configuration information", and the like.

In some embodiments, the information required by the first function may include data required by the first function, and/or data collection-related information, and the data is data required by the first function. Optionally, the name of data collection is not limited, and may be, for example, "data collection", "data acquisition", "information obtaining", "information collection", "information acquisition", and the like.

In some embodiments, the one AI function may correspond to one or more AI models. For example, one AI function may be a function or module jointly implemented by a plurality of AI models.

In other embodiments, the one AI model may correspond to one or more AI functions.

In other embodiments, the AI function and AI model may correspond one-to-one.

In some embodiments, the terms such as "artificial intelligence (AI)", "machine learning (ML)", and "AI/ML" may be used interchangeable.

In some embodiments, the first information may be carried in at least one of a radio resource control (RRC) message, a medium access control (MAC) control element (CE), downlink control information (DCI), or other messages sent by the network device to the terminal. Optionally, the first information may be carried via an RRC message.

At step S2102, the network device sends second information to the terminal.

In some embodiments, the terminal may receive the second information. For example, the terminal may receive the second information sent by the network device.

In some embodiments, the second information is different from the first information.

In some embodiments, the second information may indicate an application scope of the first information.

In some embodiments, the second information may be carried in at least one of system information, an RRC message, a MAC CE, DCI, or other messages sent by the network device to the terminal. Optionally, the second information may be carried via an RRC message. The system information may include a master information block (MIB) and/or a system information block (SIB), and optionally, the SIB may be SIB1, SIB2, or other SIBs.

In some embodiments, the second information may be carried in information sent by a core network device to the terminal. For example, the core network device sends a non-access stratum (NAS) message to the terminal, and the NAS message may carry the second information.

In some embodiments, the network device may determine the application scope of the first information.

For example, the network device may determine the application scope of the first information based on a first rule. The first rule is a rule followed by the terminal and the network device. Optionally, the first rule may be a protocol rule.

As another example, the network device may determine the application scope of the first information based on configuration information of the network device. The configuration information may be used to configure the application scope of the first information (for example, cells to which the application scope applies).

As another example, the network device may receive configuration information sent by another network device, and determine the application scope of the first information based on the configuration information.

In some embodiments, the network device may determine the application scope of the first information, and send the first information and/or the second information to the terminal.

For example, the network device may carry an indication parameter in the first information, the indication parameter may indicate the application scope of the first information, thus the network device may not need to send the second information.

As another example, the network device may indicate the application scope of the first information via the second information.

In some embodiments, the network device may send the first information first and then the second information; or may send the second information first and then the first information; or may send the first information and the second information in parallel. For example, the second information and the first information may be carried via the same RRC message, which is not limited in the embodiments of the disclosure.

In some embodiments, the first information and the second information may be sent by different network devices, for example, the first information is sent by an access network device, and the second information is sent by a core network device. The first information and the second information may also be sent by the same network device, for example, both the first information and the second information are sent by the access network device.

At step S2103, the terminal determines the application scope of the first information.

In some embodiments, the application scope may include one or more cells.

In some embodiments, the application scope may also be referred to as an applicable scope, which indicates a scope within which the terminal is able to apply the first information, for example, an applicable scope of at least one item in the first information.

In some embodiments, the application scope of the first information may be a first scope, and the terminal may determine to, based on the first scope, apply the first information in a first cell, in which the first cell is a cell in which the terminal receives the first information.

Optionally, the first scope may also be referred to as a cell specific scope, that is, the first information is only applicable to the first cell.

In other embodiments, the application scope of the first information may be a second scope, and the terminal determines to, based on the second scope, apply the first information in one or more second cells,

in which the second cell is any cell accessible to the terminal, or the second cell is a cell that sends a first ID, in which the first ID corresponds to the first function.

Optionally, the second scope may also be referred to as a UE specific scope.

In some embodiments, the first ID includes at least one of:
a function ID;
a model ID;
a dataset ID;
a data collection configuration ID;
a data collection ID;
a condition ID; or
an additional condition ID.

In this case, when the terminal moves to another cell, and the first information sent by the other cell includes the same first ID, the terminal may determine that the same first function is to be operated, thus being able to apply the first information.

In other embodiments, the application scope of the first information is a third scope, the third scope includes a plurality of cells, and the terminal determines to apply the first information in the plurality of cells within the third scope.

Optionally, the third scope may also be referred to as a cell set, a cell group, or a cell list, which is not limited to the embodiments of the disclosure.

In this case, if the other cell to which the terminal moves is within the third scope, the terminal may determine that the same first function is to be operated, thus being able to apply the first information. Optionally, if the terminal moves to another cell within the third scope, and the first information sent by the other cell includes the same first ID, the terminal may determine that the same first function is to be operated, thus being able to apply the first information.

In some embodiments, if the application scope of the first information includes a plurality of cells (for example, the second scope or third scope), third information may be exchanged between network devices corresponding to the plurality of cells, and the third information may indicate a correspondence between the first function and the first information.

Optionally, the correspondence between the first function and the first information may include: a correspondence between the first ID in the first information and part or all of the information in the first information other than the first ID, for example, a correspondence between the first ID in the first information and at least one of a second ID, beam information, a use case, reference signal resource information, coverage information, terminal distribution information, a data collection purpose, or measurement information in the first information.

In an implementation, the network device may send the third information to another network device.

In another implementation, the network device may receive the third information sent by another network device.

Optionally, when a handover of the terminal occurs, a network device of a source cell may send the third information to a network device of a target cell.

Optionally, the other network device may be a core network device or an access network device.

For example, the other network device is a core network device, the core network device sends the third information to each access network device, and each access network device may determine the application scope of the first information.

In some embodiments, after determining the application scope of the first information according to the third information, the access network device may send the second information to the terminal, for example, the access network device sends the second information to the terminal via at least one of system information (MIB and/or SIB), an RRC message, a MAC CE, DCI, or other messages. In this case, the terminal may also determine the application scope of the first information.

In other embodiments, the core network device may send the third information to each access network device, and send the second information to the terminal, and contents indicated by the second information and the third information may be the same. For example, the second information and the third information may indicate the same application scope of the first information. In this case, the access network device and the terminal may determine the application scope of the first information based on an indication of the core network device.

In this case, both the terminal and the network device may determine the application scope of the first information, and when the terminal performs a handover among a plurality of cells within the application scope, the terminal may use the same first information to operate the first function, for example, obtain data required by the first function based on the same first information.

In some embodiments, the terminal may determine the application scope of the first information based on an indication parameter in the first information.

For example, the indication parameter in the first information may indicate that the application scope of the first information is the first scope, the second scope, or the third scope.

In some embodiments, the terminal may determine the application scope of the first information based on an indication parameter in second information, in which the second information is information received by the terminal from the network device and different from the first information.

For example, the indication parameter in the second information may indicate that the application scope of the first information is the first scope, the second scope, or the third scope.

In some embodiments, the application scope of the first information is determined based on a first rule, in which the first rule is a rule followed by the terminal and the network device. For example, the first rule may be a protocol rule.

For example, it may be determined based on the first rule that the application scope of the first information is the first scope or the second scope.

In some embodiments, the network device may also determine that the application scope of the first information is the first scope, the second scope, or the third scope.

At step S2104, the terminal determines the first function.

In some embodiments, the terminal may determine the first function based on the application scope.

For example, within the one or more cells within the application scope, the first information has a correspondence with the first function, and the first function may be determined based on the first information. For example, the first function is determined based on the first ID in the first information.

Optionally, the terminal may operate a determined first function, for example, perform model training, model inference, or performance monitoring.

Optionally, outside the application scope, the terminal may not determine the first function based on the first information within the application scope.

In some embodiments, the terminal may obtain data required by the first function based on the first information and the application scope.

For example, within the application scope (for example, within the one or more cells corresponding to the application scope), the terminal may obtain data based on the first information, in which the data is data required by the first function.

In some embodiments, the data may include at least one of:
data used for model training;
data used for model inference; or
data used for performance monitoring.

In some embodiments, the terms such as "model training", "function training", and "AI model training" may be used interchangeable.

In some embodiments, the terms such as "model inference", "function inference", "AI model inference", "model application", "function application", and "AI model application" may be used interchangeable.

In some embodiments, the terms such as "performance monitoring", "performance evaluation", "performance obtaining", "performance detection", and "performance indicator collection" may be used interchangeable.

In some embodiments, the data used for model training may include data required for training the first function (the AI function and/or the AI model). For example, the data includes data required for model input and data required for a model label. Optionally, the data required for the model label may be actual measurement data corresponding to an output of the first function.

For example, the data used for model inference may include data required for AI model input.

In an implementation, the first information may include the data used for model training. For example, the data used for model training may be sent directly via the first information, and the terminal may directly obtain the data used for model training via the first information.

In another implementation, the first information may include reference signal resource configuration information required for obtaining the data used for model training. For example, the terminal may perform measurement and obtain the data used for model training based on the first information. For example, the terminal may obtain the data used for model training by measuring a reference signal corresponding to the reference signal resource configuration information indicated by the first information.

In this case, the terminal may obtain the data used for model training and train the first function based on the data, thus flexibly controlling training of the first function.

In some embodiments, the data used for model inference may include data required when performing beam prediction or other model inference via the first function (the AI function and/or the AI model).

For example, the data used for model inference may include data required for input to the AI model. Optionally, the data used for model inference may be obtained via measurement of a reference signal corresponding to the reference signal resource configuration information indicated by the first information. For example, the terminal may perform measurement and obtain the data used for model inference based on the first information. For example, the terminal may obtain the data used for model inference by measuring a reference signal corresponding to the reference signal resource configuration information indicated by the first information.

In this case, the terminal may obtain the data used for model inference and perform beam prediction or other model inference via the first function, thus flexibly controlling model inference performed on the first function.

In some embodiments, the data used for performance monitoring may include: data used for monitoring performance of an AI function of the first function, or data used for monitoring performance of at least one AI model of the first function.

For example, the data used for performance monitoring may include: data required for model input, data obtained from model output, and data (for example, actual measurement data corresponding to the model output) required for a model label. Optionally, the data used for performance monitoring may be obtained via measurement of a reference signal corresponding to the reference signal resource configuration information indicated by the first information, and may be obtained based on the model output. For example, the terminal may perform measurement and obtain the data used for performance monitoring based on the first information. For example, the terminal may obtain the data used for performance monitoring by measuring a reference signal corresponding to the reference signal resource configuration information indicated by the first information, for example, obtain the data required for model input and the data required for the model label. As another example, the terminal may obtain the data obtained from model output via model inference.

In this case, the terminal may obtain the data used for performance monitoring, compare the output and a label of the first function based on the data, and obtain performance of the first function, thus flexibly controlling performance monitoring of the first function.

In some embodiments, the terminal may send fourth information to the network device.

Optionally, the fourth information may be a response message to the first information, configured for the network device to determine that the terminal has received the fourth information.

Optionally, the fourth information may be a data collection result. For example, after obtaining data required by the first function based on the first information, the terminal may send the fourth information to the network device to notify the network device of the data collection result. The network device may determine, based on the data collection result, whether to instruct the terminal to stop data collection. For example, if the data collection result indicates success, the network device may instruct the terminal to stop data collection via a third message. As another example, if the data collection result indicates failure, the network device may not need to notify the terminal to stop data collection.

In this case, data collection by the terminal may be flexibly controlled.

In some embodiments, the first information may include at least one of:
a first ID, in which the first ID corresponds to the first function;
a second ID, in which the second ID corresponds to a measurement-related configuration, and the measurement is configured for data collection;
beam information, in which the beam information indicates beam-related information for measurement and/or prediction;
a use case, in which the use case is a case in which the first function is applied to perform beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates coverage-related information of the network device;
terminal distribution information, in which the terminal distribution information indicates a distribution of a plurality of terminals within a coverage area of the network device;
a data collection purpose, in which the data collection purpose indicates a purpose of data obtained via the first information; or
measurement information, in which the measurement information includes relevant information for the terminal to perform measurement based on the first information.

In this case, the terminal may determine, via at least one above item, information required by the first function, so as to obtain data required by the first function, thus improving the management efficiency of the first function.

In some embodiments, the terminal may have one or more first functions, and different first functions may correspond to the same or different first IDs.

In some embodiments, the first ID includes at least one of:
a function ID;
a model ID;
a dataset ID;
a data collection configuration ID;
a data collection ID;
a condition ID; or
an additional condition ID.

In an implementation, the data collection configuration ID may also be referred to as a data gathering configuration ID or a data acquisition configuration ID.

In an implementation, the data collection ID may also be referred to as a data gathering ID or a data acquisition ID.

In an implementation, the data is data used for model training, and the data may be sent by the network device directly to the terminal. For example, the network device may collect data used for model training and directly send the data to the terminal. The terminal does not need to obtain the data used for model training via measurement based on a reference signal resource configuration. In this case, the first ID sent by the network device may include a dataset ID. In this case, the terminal may determine that the first function corresponding to a model trained based on first dataset ID #1 is function #1 or model #1.

In an implementation, the data is data used for model training, and the data may be obtained by the terminal via measurement of a reference signal corresponding to reference signal resource configuration information sent by the network device. For example, information sent by the network device may include at least one ID in the first ID other than the dataset ID, for identifying the first information corresponding to the first function. In this case, the terminal may determine that the first function corresponding to a model trained based on first ID #1 is function #1 or model #1.

In another implementation, the data is data used for model inference or performance monitoring, the first ID includes a dataset ID, and the network device sends the reference signal resource configuration information to the terminal. The terminal may determine, based on the dataset ID, which first function (for example, the function #1 or the model #1) the reference signal resource configuration information is for, in terms of model inference or performance monitoring. Since in the model training process, the terminal has already determined that the first function corresponding to the model trained based on the first dataset ID #1 is the function #1 or the model #1, when the network device indicates the first dataset ID #1 to the terminal, the terminal determines that the first function corresponding to the first dataset ID #1 is the function #1 or the model #1, and thus the terminal may determine that the reference signal resource configuration information from the network device this time is for model inference or performance monitoring of the function #1 or the model #1.

In another implementation, the data is data used for model inference or performance monitoring, the first ID includes at least one ID other than the dataset ID, and the network device sends the reference signal resource configuration information to the terminal. The terminal may determine, based on the first ID, which first function (for example, the function #1 or the model #1) data obtained via measurement of a reference signal corresponding to the reference signal resource configuration information is for, in terms of model inference or performance monitoring. Since in the model training process, the terminal determines that the first function corresponding to the model trained based on the first ID #1 is the function #1 or the model #1, when the network device indicates the first ID #1 to the terminal, the terminal determines that the first function corresponding to the first ID #1 is the function #1 or the model #1, and thus the terminal may determine that the reference signal resource configuration information from the network device this time is for model inference or performance monitoring of the function #1 or the model #1.

In some embodiments, when at least one of first IDs is the same, the first information corresponds to the same first function.

For example, after the terminal performs model training based on the first ID, and obtains a trained first function, thereafter, if the network device configures measurement and reporting of some reference signal resources, and indicates the first ID, and the data collection purpose is performance monitoring and/or model inference, the terminal determines that data obtained based on the measurement and configuration of the reference signal resources may be used for performance monitoring and/or model inference of the first function trained based on previous data corresponding to the first ID. That is, in the model training process, the terminal determines that the first function corresponding to the model trained based on the first ID #1 is the function #1 or the model #1, then in the model inference or performance monitoring process, when the network device indicates the first ID #1 to the terminal and sends the reference signal resource configuration information to the terminal, the terminal determines that the first function corresponding to the first ID #1 is the function #1 or the model #1, and thus the terminal may determine that the reference signal resource configuration information from the network device this time is for model inference or performance monitoring of the function #1 or the model #1.

Optionally, when the first IDs are different, the first IDs may also correspond to the same first function. The terminal may independently determine a correspondence between the first function and the first ID. For example, the terminal may train and obtain one first function based on a plurality of first IDs, and then the terminal may determine that the plurality of first IDs correspond to one first function. The first function is an AI function or an AI model.

Optionally, when the first IDs are different, the first IDs may also correspond to the same AI function and the same AI model. The terminal may determine a correspondence between the AI function or the AI model and the first ID. For example, the terminal may train and obtain one AI function or one AI model based on a plurality of first IDs, and then the terminal may determine that the plurality of first IDs correspond to one AI function or one AI model. For example, when the first IDs are different and the terminal distribution information is different, the terminal trains, based on data corresponding to the different first IDs, a model that can simultaneously adapt to different terminal distributions.

Optionally, when the first IDs are different, the first IDs may also correspond to the same AI function and different AI models. The terminal may determine a correspondence of the AI function and the AI model with the first ID. For example, the terminal may train and obtain a plurality of AI models of one AI function based on a plurality of first IDs, and then the terminal may determine that the plurality of first IDs correspond to the one AI function and the plurality of first IDs correspond to the plurality of AI models of the one AI function. For example, when the first IDs are different and the terminal distribution information is different, the terminal trains, based on data corresponding to the different first IDs, different models that adapt to different terminal distributions, in which the different models correspond to the same AI function. For example, the first IDs all correspond to a first AI function, and that in the first information corresponding to the first AI function, except the first IDs and the terminal distribution information, other information is all the same. Since the terminal distribution information is different, the first IDs correspond to different AI models of the same AI function.

Optionally, when the first IDs are different, the first IDs may also correspond to different AI functions. The terminal may determine a correspondence between the AI function and the first ID. For example, the terminal may train and obtain a plurality of AI functions based on the first IDs, and then the terminal may determine that the plurality of first IDs respectively correspond to the plurality of AI functions. For example, when the first IDs are different and use cases are different, for example, one use case is spatial-domain beam prediction, and the other use case is time-domain beam prediction. Then the terminal trains, based on data corresponding to the two pieces of first information, different AI models corresponding to different AI functions.

In this case, the first function may be determined based on the first ID.

In some embodiments, the second ID includes at least one of:
a measurement ID, in which the measurement ID may correspond to a measurement object and a report configuration;
a measurement object ID, in which measurement object ID may be configured to determine a measurement object; or
a report ID, in which the report ID may be configured to determine a report configuration. Optionally, the report ID may also be referred to as a report configuration ID (ReportConfigId).

In this case, the measurement object and the report configuration may be determined based on the second ID, so that the terminal performs measurement to obtain data.

In some embodiments, the beam information includes at least one of:
a beam codebook ID, in which beam codebook ID may indicate codebook information used by the network device to transmit a beam; optionally, the beam codebook ID may also be referred to as a gNB beam codebook ID;
an antenna configuration ID, in which the antenna configuration ID may indicate antenna configuration information of the network device; optionally, the antenna configuration ID may also be referred to as a gNB antenna configuration ID; the antenna configuration information may include at least one of a number of antenna panels, a number of antennas, an interval between antennas, and an antenna array arrangement; or
a beam type, in which the beam type may indicate a type of the beam sent by the network device.

In an implementation, the beam type may include at least one of a discrete Fourier transform (DFT) beam or a non-DFT beam.

In some embodiments, the use case may include at least one of:
a spatial-domain beam prediction case;
a time-domain beam prediction case; or
a spatial-domain beam prediction case and a time-domain beam prediction case.

In some embodiments, the reference signal resource information may include at least one of:
a first reference signal resource set, in which reference signal resources in the first reference signal resource set correspond to a first beam, and the first beam is a beam corresponding to an input value of the first function;
a second reference signal resource set, in which reference signal resources in the second reference signal resource set correspond to a second beam, and the second beam is a beam corresponding to an output value of the first function;
a set relationship, in which the set relationship includes a relationship between the first reference signal resource set and the second reference signal resource set;
time information corresponding to the first reference signal resource set, in which the time information may be a time quantity value, for example, a number of historical measurement time instances;
time information corresponding to the second reference signal resource set, in which the time information may be a time quantity value, for example, a number of future time instances; or
a time pattern, in which the time pattern is a pattern of time corresponding to the first reference signal resource set and time corresponding to the second reference signal resource set.

In an implementation, in the case that the use case is a spatial-domain beam prediction case, the reference signal resource information includes at least one of: a first reference signal resource set, a second reference signal resource set, or a set relationship.

In another implementation, in the case that the use case is a time-domain beam prediction case, the reference signal resource information includes at least one of: a first reference signal resource set, a second reference signal resource set, a set relationship, time information corresponding to the first reference signal resource set, time information corresponding to the second reference signal resource set, or a time pattern. For example, in the case that the use case is a time-domain beam prediction case, the reference signal resource information may include the time information corresponding to the first reference signal resource set, the time information corresponding to the second reference signal resource set, and the time pattern.

In some embodiments, the first reference signal resource set may include the number of first reference signal resources in the first reference signal resource set, and may further include at least one of a resource ID, a time-frequency resource, and a reference signal (RS) sequence corresponding to each first reference signal resource.

In some embodiments, the second reference signal resource set may include the number of reference signal resources in the second reference signal resource set, and may further include at least one of a resource ID, a time-frequency resource, and an RS sequence corresponding to each second reference signal resource.

In an implementation, the set relationship may include any one of:
the first reference signal resource set being a subset of the second reference signal resource set; for example, the second reference signal set may include M reference signal resources (each reference signal resource corresponds to a beam direction), for example, M = 32, and the first reference signal resource set may include N reference signal resources, N being less than M, for example, N = 8, in which M and N are both positive integers;
the first reference signal resource set being different from the second reference signal resource set, beams corresponding to the first reference signal resource set being wide beams, and beams corresponding to the second reference signal resource set being narrow beams; optionally, beam coverage ranges corresponding to the first reference signal resource set and the second reference signal resource set may be the same or different; or
the first reference signal resource set being the same as the second reference signal resource set.

Optionally, for spatial-domain beam prediction, the set relationship may include any one of:
the first reference signal resource set being a subset of the second reference signal resource set; or
the first reference signal resource set being different from the second reference signal resource set, beams corresponding to the first reference signal resource set being wide beams, and beams corresponding to the second reference signal resource set being narrow beams.

Optionally, for time-domain beam prediction, the set relationship may include any one of:
the first reference signal resource set being a subset of the second reference signal resource set;
the first reference signal resource set being different from the second reference signal resource set, beams corresponding to the first reference signal resource set being wide beams, and beams corresponding to the second reference signal resource set being narrow beams; or
the first reference signal resource set being the same as the second reference signal resource set.

In an implementation, the time pattern may include any one of:
a first pattern, in which the first pattern (Pattern1) indicates N historical periods and M future periods, and measurement results of the N historical periods are used by the terminal to obtain, based on the first function, prediction results of the M future periods; or
a second pattern, in which the second pattern (Pattern2) indicates K historical periods, and measurement results of the K historical periods are used by the terminal to obtain, based on the first function, L prediction results within the (K+1)-th future period.

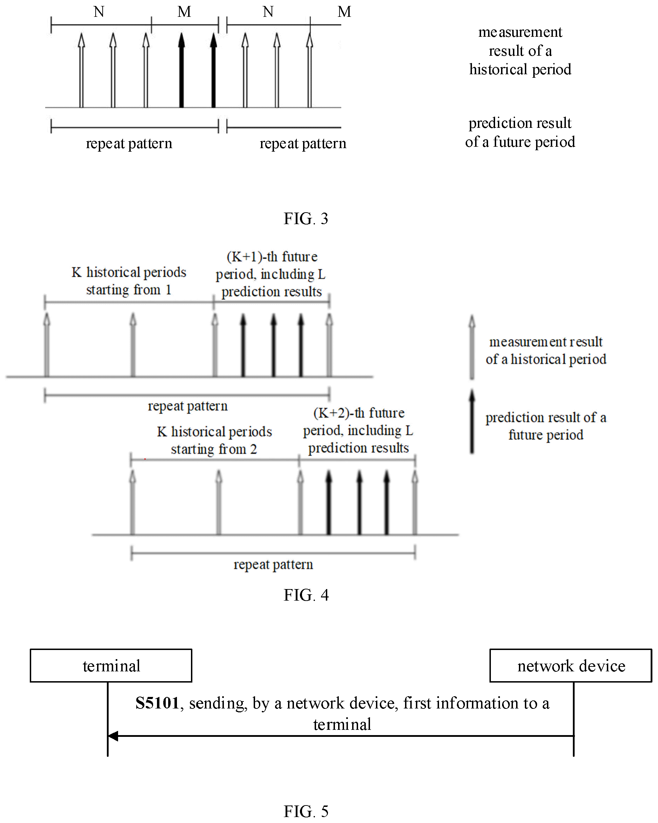

FIG. 3 is a schematic diagram illustrating the first pattern according to an embodiment of the disclosure. As shown in FIG. 3, based on the first pattern (Pattern1), the measurement results of the N historical periods and the prediction results of the M future periods are a repeat pattern. It should be noted that, in FIG. 3, N = 3 and M = 2 are used as an example, N may be any positive integer, and M may also be any positive integer.

Optionally, in the first pattern, the historical periods and the future periods may be short periods, and the repeat pattern consisting of the N historical periods and the M future periods may be a long period.

In some embodiments, the terminal may use the measurement results of the N historical periods as input values of the first function, and obtain output values predicted by the first function as prediction results of the M future periods.

Optionally, during the M future periods, the network device may not send a reference signal for beam measurement. However, since beam results within the M future periods are obtained by prediction and cannot be used as input of the first function, after the M periods, the network device may continue to send a reference signal for beam measurement in N historical periods within a second long period, and then perform a repeat pattern.

FIG. 4 is a schematic diagram illustrating a second pattern according to an embodiment of the disclosure. As shown in FIG. 4, based on the second pattern (Pattern2), measurement results of K historical periods and L prediction results included in the (K + 1)-th future period are a repeat pattern. It should be noted that, in FIG. 4, K = 2 and L = 3 are used as an example, K may be any positive integer, and L may also be any positive integer.

Optionally, in the second pattern, the historical periods and the future periods may be long periods, the (K + 1)-th future period may include L short periods, and one short period corresponds to one prediction result.

In some embodiments, the terminal may use measurement results of K historical periods starting from 1 as input values of the first function, and obtain output values predicted by the first function as prediction results of the L short periods within the (K + 1)-th future period. Optionally, the terminal may also use measurement results of K + 1 historical periods starting from 2 as input values of the first function, and obtain output values predicted by the first function as prediction results of the L short periods within the (K + 2)-th future period.

Optionally, the network device may send a reference signal for beam measurement in each historical period (long period), and the terminal may predict and obtain a prediction result of each short period. In this case, the repeat pattern of the second pattern may be simplified to a pattern of a long period including a plurality of short periods.

In some embodiments, the coverage information may include a deployment type of the network device and/or an inter-site distance.

Optionally, the deployment type of the network device may be a deployment type of a base station. For example, the deployment type may be any one of: urban macro base station, urban micro base station, indoor base station, dense urban area, rural area, or hotspot.

Optionally, the inter-site distance may represent a distance between adjacent base stations, for example, the inter-site distance (ISD) may be 100 meters, 200 meters, 500 meters or 1000 meters.

In some embodiments, the terminal distribution information includes a ratio of indoor UEs to outdoor UEs.

Optionally, the terminal distribution information may also include at least one of a proportion of indoor UEs, a proportion of outdoor UEs, the number of UEs, and the like.

Optionally, an indoor UE may be a terminal located indoors (for example, in areas such as inside a residential building, inside an office building, inside a shopping mall), and an outdoor UE may be a terminal located outdoors (for example, in areas such as a street, a park).

In some embodiments, the measurement information includes at least one of:
a measurement quantity, in which the measurement quantity may include layer 1 reference signal received power (L1-RSRP) and/or layer 1 signal to interference plus noise ratio (L1-SINR);
event information, in which the event information is information related to an event that triggers measurement reporting; and
a report quantity, in which the report quantity indicates information reported by the terminal to the network device.

In some embodiments, the event information may include at least one of:
an event ID;
information such as a threshold and an offset of the event; or
an event description, in which the event description may indicate a trigger condition for event reporting, for example, the event description may indicate that when a measurement value (for example, a performance indicator) is greater than a threshold, the event is reported; as another example, the event description may indicate that when a measurement value (for example, a performance indicator) is less than a first threshold, the event is reported.

In some embodiments, the report quantity may include at least one of:
a resource set ID;
a resource ID, for example, the report quantity includes a model label: IDs of best K resource;
L1-RSRP, for example, the report quantity includes a model input: a resource ID and an L1-RSRP corresponding to the resource ID, or only includes an L1-RSRP corresponding to a resource ID;
L1-SINR, for example, the report quantity includes a model input: a resource ID and an L1-SINR corresponding to the resource ID, or only includes an L1-SINR corresponding to a resource ID;
a performance metric, in which the performance metric may be a performance metric related to the first function;
an event ID; or
a determined function operation, in which the function operation may include operations such as activation, deactivation, and fallback, and the function operation may also be referred to as a model operation.

In some embodiments, the report quantity may include a performance metric of the first function, and the performance metric may include at least one of:
a prediction accuracy, in which the prediction accuracy may be a probability that a predicted best reference signal resource includes an actual best reference signal resource, the predicted best reference signal resource is an best reference signal resource predicted by the first function, the actual best reference signal resource is an best reference signal resource actually measured by the terminal, and the best reference signal resource is top N reference signal resources with largest L1-RSRP or L1-SINR in the second reference signal resource set, N being a positive integer; or
a signal strength difference, in which the signal strength difference is a difference between a predicted signal strength and an actual signal strength.

In an implementation, prediction accuracy may mean that IDs of the best N reference signal resource predicted by the first function include an ID of an actual best reference signal resource, and the ID of a reference signal resource may be a synchronization signal block (SSB) ID, a channel state information reference signal (CSI-RS) ID, or a sounding reference signal (SRS) ID. N is a positive integer. For example, N may be 1 or greater than 1.

Optionally, the probability may be a ratio of the number of times the predicted best reference signal resource includes the actual best reference signal resource to a total number of predictions. For example, if prediction is performed 100 times, in 90 times of which the obtained predicted best reference signal resource includes the actual best reference signal resource, and in 10 times of which the obtained predicted best reference signal resource does not include the actual best reference signal resource, the probability is 90%, that is, the prediction accuracy is 90%.

Optionally, the predicted signal strength and the actual signal strength may have a plurality of combination modes.

In an implementation, the predicted signal strength is a predicted signal strength corresponding to the predicted best reference signal resource, and the actual signal strength is an actual signal strength corresponding to the actual best reference signal resource.

In an implementation, the predicted signal strength is an actual signal strength corresponding to the predicted best reference signal resource, and the actual signal strength is an actually measured signal strength corresponding to the actual best reference signal resource.

In another implementation, the predicted signal strength is a predicted signal strength corresponding to the predicted best reference signal resource, and the actual signal strength is an actual signal strength corresponding to the predicted best reference signal resource.

In another implementation, the predicted signal strength is a predicted signal strength corresponding to the actual best reference signal resource, and the actual signal strength is an actual signal strength corresponding to the actual best reference signal resource.

In implementation, the signal strength difference may be a difference of L1-RSRP, for example, an average L1-RSRP difference in decibel (dB).

For example, the signal strength difference may be a difference between an actual L1-RSRP corresponding to the ID of the predicted best reference signal resource and an actual L1-RSRP corresponding to an ID of the actual best reference signal resource.

As another example, the signal strength difference may be a difference between a predicted L1-RSRP corresponding to the ID of the predicted best reference signal resource and an actual L1-RSRP corresponding to the ID of the predicted best reference signal resource.

As another example, the signal strength difference may be a difference between an actual L1-RSRP corresponding to the ID of the actual best reference signal resource and a predicted L1-RSRP corresponding to the ID of the actual best reference signal resource ID.

As another example, the signal strength difference may be a difference between a predicted L1-RSRP corresponding to the ID of the predicted best reference signal resource and an actual L1-RSRP corresponding to the ID of the actual best reference signal resource.

In another implementation, the signal strength difference may be a difference of L1-SINR, for example, an average L1-SINR difference in dB.

For example, the signal strength difference may be a difference between an actual L1-SINR corresponding to the ID of the predicted best reference signal resource and an actual L1-SINR corresponding to the ID of the actual best reference signal resource.

As another example, the signal strength difference may be a difference between a predicted L1-SINR corresponding to the ID of the predicted best reference signal resource and an actual L1-SINR corresponding to the ID of the predicted best reference signal resource.

As another example, the signal strength difference may be a difference between an actual L1-SINR corresponding to the ID of the actual best reference signal resource and a predicted L1-SINR corresponding to the ID of the actual best reference signal resource.

As another example, the signal strength difference may be a difference between a predicted L1-SINR corresponding to the ID of the predicted best reference signal resource and an actual L1-SINR corresponding to the ID of the actual best reference signal resource.

In this case, the performance metric of the first function may be determined based on the prediction accuracy and/or signal strength difference, so as to perform performance evaluation on the first function.

In some embodiments, the data collection purpose includes at least one of:
model training;
model inference; or
performance monitoring.

Optionally, the name of the "data collection purpose" is not limited, and may be, for example, "data collection purpose", "data acquisition purpose", "information obtaining purpose", "information collection purpose", "data collection effect", "information obtaining effect", "information collection effect", and the like.

In some embodiments, the content of the first information corresponding to different data collection purposes may be different or not completely identical.

For example, if the data collection purpose is performance monitoring, the first information includes the event information, and the report quantity includes the performance metric. On the contrary, if the data collection purpose is not performance monitoring, for example, model training or model inference, the first information does not include the event information, and the report quantity may not include the performance metric.

In this case, different first information may be determined based on different data collection purposes, thus instructing the terminal to obtain different data for the first function, improving the flexibility of data collection.

FIG. 5 is an interaction diagram illustrating a communication method according to an embodiment of the disclosure. The method may be performed by the communication system. As shown in FIG. 5, the method may include the following step S5101.

At step S5101, a network device sends first information to a terminal.

For an optional implementation of step S5101, reference may be made to the optional implementation of step S2101 in FIG. 2 and other associated parts in the embodiments involved in FIG. 2.

In some embodiments, the embodiment shown in FIG. 5 may also be combined with any one or more steps, or one or more optional embodiments in the embodiment shown in FIG. 2 as a new embodiment. For example, the terminal may determine the application scope of the first information based on the optional implementation of step S2103 in FIG. 2.

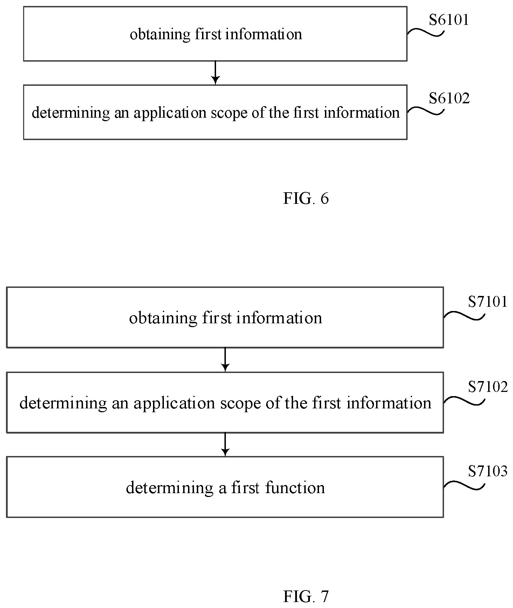

FIG. 6 is a schematic flowchart illustrating a communication method according to an embodiment of the disclosure. As shown in FIG. 6, embodiments of the disclosure relate to the communication method, which may be performed by a terminal. The method may include the following steps S6101 to S6102.

At step S6101, first information is obtained.

For an optional implementation of step S6101, reference may be made to the optional implementation of step S2101 in FIG. 2 and other associated parts in the embodiments involved in FIG. 2.

In some embodiments, the terminal may receive the first information sent by a network device, but is not limited herein, and the terminal may also receive the first information sent by other subjects.

In some embodiments, the terminal may obtain first information specified by a protocol.

In some embodiments, the terminal may obtain the first information from an upper layer(s).

In some embodiments, the terminal may obtain the first information by performing processing.

In some embodiments, the first information is used to determine information required by the first function, the first function is configured to perform beam prediction, and the first function is an AI model and/or an AI function.

At step S6102, an application scope of the first information is determined.

For an optional implementation of step S6102, reference may be made to the optional implementation of step S2103 in FIG. 2 and other associated parts in the embodiments involved in FIG. 2.

FIG. 7 is a flowchart illustrating a communication method according to an embodiment of the disclosure. As shown in FIG. 7, embodiments of the disclosure relate to the communication method, which may be performed by a terminal. The method may include the following steps S7101 to S7103.

At step S7101, first information is obtained.

For an optional implementation of step S7101, reference may be made to the optional implementation of step S2101 in FIG. 2 and other associated parts in the embodiments involved in FIG. 2.

In some embodiments, the terminal may receive the first information sent by the network device, but is not limited herein, and the terminal may also receive the first information sent by other subjects.

In some embodiments, the terminal may obtain first information specified by a protocol.

In some embodiments, the terminal may obtain the first information from an upper layer(s).

In some embodiments, the terminal may obtain the first information by performing processing.

In some embodiments, the first information is used to determine information required by the first function, the first function is configured to perform beam prediction, and the first function is an AI model and/or an AI function.

At step S7102, an application scope of the first information is determined.

For an optional implementation of step S7102, reference may be made to the optional implementation of step S2103 in FIG. 2 and other associated parts in the embodiments involved in FIG. 2.

At step S7103, the first function is determined.

In some embodiments, the terminal may determine the first function based on the application scope.

For an optional implementation of step S7103, reference may be made to the optional implementation of step S2104 in FIG. 2 and other associated parts in the embodiments involved in FIG. 2.

In some embodiments, the terminal may receive second information, for example, may receive second information sent by the network device.

In some embodiments, the second information is different from the first information.

In some embodiments, the second information may indicate the application scope of the first information.

In some embodiments, determining the application scope of the first information includes at least one of:

determining the application scope of the first information based on an indication parameter in the first information;

determining the application scope of the first information based on an indication parameter in second information, in which the second information is information received by the terminal from the network device and different from the first information; or

determining the application scope of the first information based on a first rule, in which the first rule is a rule followed by the terminal and the network device.

In some embodiments,

the application scope of the first information is a first scope, and the terminal determines to, based on the first scope, apply the first information in a first cell, the first cell being a cell in which the terminal receives the first information.

In some embodiments,

the application scope of the first information is a second scope, and the terminal determines to, based on the second scope, apply the first information in one or more second cells,

in which the second cell is any cell accessible to the terminal, or the second cell is a cell that sends a first ID, in which the first ID corresponds to the first function.

In some embodiments,

the application scope of the first information is a third scope, the third scope includes a plurality of cells, and the terminal determines to apply the first information in the plurality of cells within the third scope.

In some embodiments, the first information includes at least one of:
a first ID, in which the first ID corresponds to the first function;
a second ID, in which the second ID corresponds to a measurement-related configuration, and the measurement is configured for data collection;
beam information, in which the beam information indicates beam-related information for measurement and/or prediction;
a use case, in which the use case is a case in which the first function is applied to perform beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates coverage-related information of the network device;
terminal distribution information, in which the terminal distribution information indicates a distribution of a plurality of terminals within a coverage area of the network device;
a data collection purpose, in which the data collection purpose indicates a purpose of data obtained via the first information; or
measurement information, in which the measurement information includes relevant information for the terminal to perform measurement based on the first information.

In some embodiments, the use case includes at least one of:
a spatial-domain beam prediction case;
a time-domain beam prediction case; or
a spatial-domain beam prediction case and a time-domain beam prediction case.

In some embodiments, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between the first reference signal resource set and the second reference signal resource set;
time information corresponding to the first reference signal resource set;
time information corresponding to the second reference signal resource set; or
a time pattern, in which the time pattern is a pattern of time corresponding to the first reference signal resource set and time corresponding to the second reference signal resource set.

In some embodiments, the data collection purpose includes at least one of:
model training;
model inference; or
performance monitoring.

In some embodiments, the first ID includes at least one of:
a function ID;
a model ID;
a dataset ID;
a data collection configuration ID;
a data collection ID;
a condition ID; or
an additional condition ID.

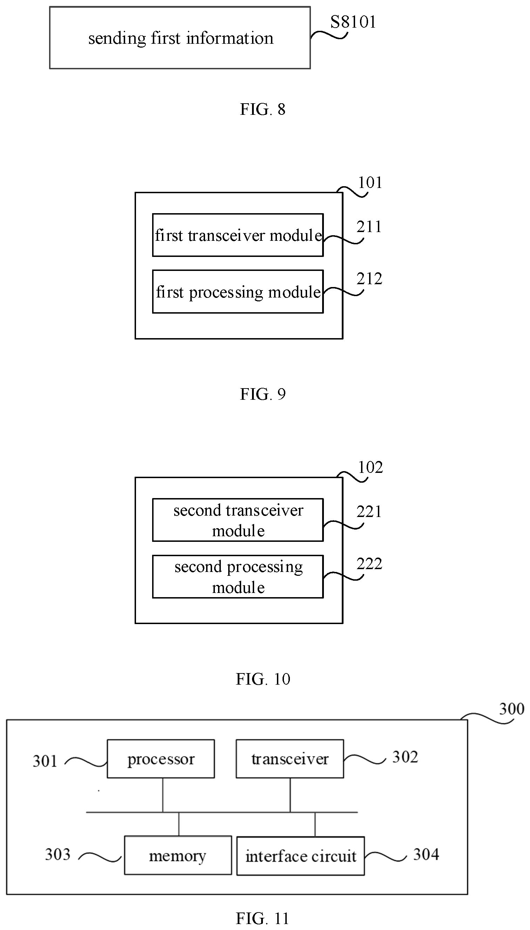

FIG. 8 is a flowchart illustrating a communication method according to an embodiment of the disclosure. As shown in FIG. 8, embodiments of the disclosure relate to the communication method, which may be performed by a network device. The method may include the following step S8101.

At step S8101, first information is sent.

For an optional implementation of step S8101, reference may be made to the optional implementation of step S2101 in FIG. 2 and other associated parts in the embodiments involved in FIG. 2.

In some embodiments, the network device may send the first information to a terminal, but is not limited herein, and the network device may also send the first information to other subjects.

In some embodiments, the first information is information corresponding to a first function, the first function is configured to perform beam prediction, and the first function is an AI model and/or an AI function.

In some embodiments, the method further includes at least one of:
carrying an indication parameter in the first information, in which the indication parameter indicates an application scope of the first information;
sending second information to the terminal, in which the second information is used to instruct the terminal to determine the application scope of the first information; or
determining the application scope of the first information based on a first rule, in which the first rule is a rule followed by the terminal and the network device.

In some embodiments,
the application scope of the first information is a first scope, the first scope includes a first cell, and the first cell is a cell in which the terminal receives the first information.

In some embodiments,
the application scope of the first information is a second scope, the second scope includes one or more second cells,
in which the second cell is any cell accessible to the terminal, or the second cell is a cell that sends a first ID, in which the first ID corresponds to the first function.

In some embodiments,
the application scope of the first information is a third scope, the third scope includes a plurality of cells, and the plurality of cells are indicated by an indication parameter carried in the first information or by the second information.

In some embodiments, the method further includes:
sending third information to another network device, in which the third information indicates a correspondence between the first function and the first information; and/or
receiving the third information sent by other network devices.

In some embodiments, the first information includes at least one of:
a first ID, in which the first ID corresponds to the first function;
a second ID, in which the second ID corresponds to a measurement-related configuration, and the measurement is configured for data collection;
beam information, in which the beam information indicates beam-related information for measurement and/or prediction;
a use case, in which the use case is a case in which the first function is applied to perform beam prediction;
reference signal resource information, in which the reference signal resource information is configured to determine a first beam and/or a second beam, the first beam is a beam corresponding to an input value of the first function, and the second beam is a beam corresponding to an output value of the first function;
coverage information, in which the coverage information indicates coverage-related information of the network device;
terminal distribution information, in which the terminal distribution information indicates a distribution of a plurality of terminals within a coverage area of the network device;
a data collection purpose, in which the data collection purpose indicates a purpose of data obtained via the first information; or
measurement information, in which the measurement information includes relevant information for the terminal to perform measurement based on the first information.

In some embodiments, the use case includes at least one of:
a spatial-domain beam prediction case;
a time-domain beam prediction case; or
a spatial-domain beam prediction case and a time-domain beam prediction case.

In some embodiments, the reference signal resource information includes at least one of:
a first reference signal resource set, in which reference signal resources in the first reference signal resource set correspond to the first beam;
a second reference signal resource set, in which reference signal resources in the second reference signal resource set correspond to the second beam;
a set relationship, in which the set relationship includes a relationship between the first reference signal resource set and the second reference signal resource set;
time information corresponding to the first reference signal resource set;
time information corresponding to the second reference signal resource set; or
a time pattern, in which the time pattern is a pattern of time corresponding to the first reference signal resource set and time corresponding to the second reference signal resource set.

In some embodiments, the data collection purpose includes at least one of:
model training;
model inference; or
performance monitoring.

In some embodiments, the first ID includes at least one of:
a function ID;
a model ID;
a dataset ID;
a data collection configuration ID;
a data collection ID;
a condition ID; or
an additional condition ID.

In some embodiments of the disclosure, a communication system is provided. The communication system may include a terminal, configured to perform the communication method performed by the terminal in the above embodiments of the disclosure; and a network device, configured to perform the communication method performed by the network device in the above embodiments of the disclosure.

Embodiments of the disclosure also provide an apparatus for implementing any one of the above methods. For example, an apparatus is provided, including units or modules for performing the steps executed by the terminal in any one of the above methods. For example, another apparatus is provided, including units or modules for performing the steps executed by the network device (e.g., an access network device, a core network function node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In implementation, the processor may be a circuit with a capability to read and run instructions, such as a CPU, a microprocessor, a graphics processing unit (GPU) (which may be understood as a type of microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In a reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for AI, which may be understood as a type of ASIC, such as a neural network processing unit (NPU), a tensor processing unit (TPU), a deep learning processing unit (DPU), etc.

FIG. 9 is a block diagram illustrating a terminal according to an embodiment of the disclosure. As shown in FIG. 9, the terminal 101 may include at least one of a first transceiver module 211, a first processing module 212, or the like.

In some embodiments, the first transceiver module 211 is configured to receive first information sent by a network device; in which the first information is information corresponding to a first function, the first function is configured to perform beam prediction, and the first function is an AI model and/or an AI function.

In some embodiments, the first processing module 212 is configured to determine an application scope of the first information, the application scope including one or more cells; and determine the first function based on the application scope.

In some embodiments, for an implementation of steps performed by the first transceiver module 211 and/or the first processing module 212, reference may be made to the description in the above embodiments of the disclosure, which is not repeated herein.

In some embodiments, for a specific implementation of the first information, reference may be made to the description in the above embodiments of the disclosure, which is not repeated herein.

In some embodiments, for a specific implementation of the application scope of the first information, reference may be made to the description in the above embodiments of the disclosure, which is not repeated herein.

In some embodiments, the first transceiver module 211 may include a transmitting module and/or a receiving module. The transmitting module and the receiving module may be separate or may be integrated.

In some embodiments, the first processing module 212 may be a single module, or may include a plurality of sub-modules. Optionally, the plurality of sub-modules respectively perform all or part of the steps required to be performed by the first processing module 212. Optionally, the first processing module may be interchangeable with a processor.

FIG. 10 is a block diagram illustrating a network device according to an embodiment of the disclosure. As shown in FIG. 10, the network device 102 may include at least one of a second transceiver module 221, a second processing module 222, or the like.

In some embodiments, the second transceiver module 221 is configured to send first information to a terminal; in which the first information is information corresponding to a first function, the first function is configured to perform beam prediction, and the first function is an AI model and/or an AI function, the terminal determines an application scope of the first information, and determines the first function based on the application scope, the application scope including one or more cells.

In some embodiments, the second processing module 222 is configured to determine the application scope of the first information.

In some embodiments, for an implementation of steps performed by the second transceiver module 221 and/or the second processing module 222, reference may be made to the description in the above embodiments of the disclosure, which is not repeated herein.

In some embodiments, for a specific implementation of the first information, reference may be made to the description in the above embodiments of the disclosure, which is not repeated herein.

In some embodiments, for a specific implementation of the application scope of the first information, reference may be made to the description in the above embodiments of the disclosure, which is not repeated herein.

In some embodiments, the second transceiver module 221 may include a transmitting module and/or a receiving module. The transmitting module and the receiving module may be separate or may be integrated.

In some embodiments, the second processing module 222 may be a single module, or may include a plurality of sub-modules. Optionally, the plurality of sub-modules respectively perform all or part of the steps required to be performed by the second processing module 222. Optionally, the second processing module may be interchangeable with a processor.

FIG. 11 is a block diagram illustrating a communication device 300 according to an embodiment of the disclosure. The communication device 300 may be a network device (e.g., an access network device, a core network device, etc.), or may be a terminal (e.g., a UE, etc.), or a chip, a chip system, a processor, etc. that supports the network device to implement any one of the methods, or a chip, a chip system, a processor, etc. that supports the terminal to implement any one of the methods. The communication device 300 may be configured to implement the method in the above method embodiments. For details, reference may be made to the description in the above method embodiments.

As shown in FIG. 11, the communication device 300 may include one or more processors 301. The processor 301 may be a general-purpose processor or a special-purpose processor, for example, a baseband processor or a central processing unit. The baseband processor may be used to process communication protocols and communication data. The central processing unit may be used to control communication apparatuses (such as a base station, a baseband chip, a terminal, a terminal chip, a DU or a CU, etc.), execute programs, and process program data. Optionally, the communication device 300 may be configured to implement any one of the above methods. Optionally, the one or more processors 301 are configured to invoke instructions to cause the communication device 300 to implement any one of the above methods.

In some embodiments, the communication device 300 further includes one or more transceivers 302. When the communication device 300 includes one or more transceivers 302, the transceiver 302 may perform the communication steps such as sending and/or receiving (e.g., step S2101) in the above method, and the processor 301 performs other steps.

In some embodiments, the transceiver may include a receiver and/or a transmitter, which may be separate or integrated together. Optionally, the terms such as transceiver, transceiver unit, transceiving unit, transceiving circuit, etc. may be used interchangeably; the terms such as transmitter, transmission unit, transmitting circuit, and interface etc. may be used interchangeably; and the terms such as receiver, reception unit, receiving unit, receiving circuit, etc. may be used interchangeably.

Optionally, the communication device 300 further includes one or more memories 303 for storing instructions. Optionally, all or part of the memories 303 may also be located outside the communication device 300. In an optional embodiment, the communication device 300 may include one or more interface circuits 304. Optionally, the interface circuit 304 is connected to a memory 303. The interface circuit 304 may be configured to receive data from the memory 303 or other devices, and may be configured to send data to the memory 303 or other devices. For example, the interface circuit 304 may read data stored in the memory 303, and send the data to the processor 301.

The communication device 300 in the above embodiments may be a terminal or a network device, but a scope of the communication device 300 in the disclosure is not limited herein, and a structure of the communication device 300 may not be limited by FIG. 11. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an AI device, etc.; 6) others.

Embodiments of the disclosure further provide a chip. The chip includes one or more processors, and the chip may be configured to implement any one of the above methods.

In some embodiments, the chip further includes one or more interface circuits. Optionally, the terms such as interface circuit, interface, transceiver pin, transceiver, etc. may be used interchangeably. In some embodiments, the chip further includes one or more memories configured to store data. Optionally, all or part of the memory may be external to the chip.

Optionally, the interface circuit is connected to the memory, the interface circuit may be configured to receive data from the memory or other devices, and the interface circuit may be configured to send data to the memory or other devices. For example, the interface circuit may read data stored in the memory, and send the data to the processor.

In some embodiments, the interface circuit performs communication steps such as sending and/or receiving in the above method (e.g., S2101). The interface circuit performing communication steps such as sending and/or receiving in the above method, for example, means that the interface circuit performs data interaction among the processor, chip, memory, or transceiver component. In some embodiments, the processor may perform other processing steps.

The modules and/or components described in the embodiments of virtual devices, physical devices, chips, etc., may be arbitrarily combined or separated according to circumstances. Optionally, part or all of the steps may also be performed collaboratively by a plurality of modules and/or components, which is not limited herein.

The disclosure also provides a storage medium for storing instructions. When the instructions are running on the communication device, the communication device is caused to implement any one of the above methods. Optionally, the above storage medium is an electronic storage medium. Optionally, the above storage medium is a computer-readable storage medium, which is not limited herein, and the above storage medium may also be a storage medium readable by other devices. Optionally, the above storage medium may be a non-transitory storage medium, which is not limited herein, and the above storage medium may also be a transitory storage medium.

The disclosure also provides a program product. When the program product is executed by the communication device, the communication device is caused to implement any one of the above methods. Optionally, the above program product is a computer program product.

The disclosure also provides a computer program. When the computer program is running on a computer, the computer is caused to implement any one of the above methods.

## Claims

1. A communication method, performed by a terminal, comprising:
receiving first information sent by a network device, wherein the first information is information corresponding to a first function, the first function is configured to perform beam prediction, and the first function is an artificial intelligence (AI) model and/or an AI function;
determining an application scope of the first information, wherein the application scope comprises one or more cells; and
determining the first function based on the application scope.

2. The method according to claim 1, wherein determining the application scope of the first information comprises at least one of:
determining the application scope of the first information based on an indication parameter in the first information;
determining the application scope of the first information based on an indication parameter in second information, wherein the second information is information received by the terminal from the network device and different from the first information; or
determining the application scope of the first information based on a first rule, wherein the first rule is a rule followed by the terminal and the network device.

3. The method according to claim 1 or 2, wherein the application scope of the first information is a first scope, and the terminal determines to, based on the first scope, apply the first information in a first cell, the first cell being a cell in which the terminal receives the first information.

4. The method according to claim 1 or 2, wherein the application scope of the first information is a second scope, and the terminal determines to, based on the second scope, apply the first information in one or more second cells,
wherein the second cell is any cell accessible to the terminal, or the second cell is a cell that sends a first identifier (ID), wherein the first ID corresponds to the first function.

5. The method according to claim 1 or 2, wherein the application scope of the first information is a third scope, the third scope comprises a plurality of cells, and the terminal determines to apply the first information in the plurality of cells within the third scope.

6. The method according to claim 1, wherein the first information comprises at least one of:
a first identifier (ID), wherein the first ID corresponds to the first function;
a second ID, wherein the second ID corresponds to a measurement-related configuration, and the measurement is configured for data collection;
beam information, wherein the beam information indicates beam-related information for measurement and/or prediction;
a use case, wherein the use case is a case in which the first function is applied to perform beam prediction;
reference signal resource information, wherein the reference signal resource information is configured to determine a first beam and/or a second beam, the first beam is a beam corresponding to an input value of the first function, and the second beam is a beam corresponding to an output value of the first function;
coverage information, wherein the coverage information indicates coverage-related information of the network device;
terminal distribution information, wherein the terminal distribution information indicates a distribution of a plurality of terminals within a coverage area of the network device;
a data collection purpose, wherein the data collection purpose indicates a purpose of data obtained via the first information; or
measurement information, wherein the measurement information comprises relevant information for the terminal to perform measurement based on the first information.

7. The method according to claim 6, wherein the use case comprises at least one of:
a spatial-domain beam prediction case;
a time-domain beam prediction case; or
a spatial-domain beam prediction case and a time-domain beam prediction case.

8. The method according to claim 6, wherein the reference signal resource information comprises at least one of:
a first reference signal resource set, wherein reference signal resources in the first reference signal resource set correspond to the first beam;
a second reference signal resource set, wherein reference signal resources in the second reference signal resource set correspond to the second beam;
a set relationship, wherein the set relationship comprises a relationship between the first reference signal resource set and the second reference signal resource set;
time information corresponding to the first reference signal resource set;
time information corresponding to the second reference signal resource set; or
a time pattern, wherein the time pattern is a pattern of time corresponding to the first reference signal resource set and time corresponding to the second reference signal resource set.

9. The method according to claim 6, wherein the data collection purpose comprises at least one of:
model training;
model inference; or
performance monitoring.

10. The method according to claim 6, wherein the first ID comprises at least one of:
a function ID;
a model ID;
a dataset ID;
a data collection configuration ID;
a data collection ID;
a condition ID; or
an additional condition ID.

11. A communication method, performed by a network device, comprising:
sending first information to a terminal, wherein the first information is information corresponding to a first function, the first function is configured to perform beam prediction, and the first function is an artificial intelligence (AI) model and/or an AI function, the terminal determines an application scope of the first information, and determines the first function based on the application scope, the application scope comprising one or more cells.

12. The method according to claim 11, comprising at least one of:
carrying an indication parameter in the first information, wherein the indication parameter indicates the application scope of the first information;
sending second information to the terminal, wherein the second information is used to instruct the terminal to determine the application scope of the first information; or
determining the application scope of the first information based on a first rule, wherein the first rule is a rule followed by the terminal and the network device.

13. The method according to claim 11 or 12, wherein the application scope of the first information is a first scope, the first scope comprises a first cell, and the first cell is a cell in which the terminal receives the first information.

14. The method according to claim 11 or 12, wherein the application scope of the first information is a second scope, the second scope comprises one or more second cells,
wherein the second cell is any cell accessible to the terminal, or the second cell is a cell that sends a first identifier (ID), wherein the first ID corresponds to the first function.

15. The method according to claim 12, wherein the application scope of the first information is a third scope, the third scope comprises a plurality of cells, and the plurality of cells are indicated by an indication parameter carried in the first information or by the second information.

16. The method according to claim 15, further comprising:
sending third information to another network device, wherein the third information indicates a correspondence between the first function and the first information; and/or
receiving the third information sent by another network device.

17. The method according to claim 11, wherein the first information comprises at least one of:
a first identifier (ID), wherein the first ID corresponds to the first function;
a second ID, wherein the second ID corresponds to a measurement-related configuration, and the measurement is configured for data collection;
beam information, wherein the beam information indicates beam-related information for measurement and/or prediction;
a use case, wherein the use case is a case in which the first function is applied to perform beam prediction;
reference signal resource information, wherein the reference signal resource information is configured to determine a first beam and/or a second beam, the first beam is a beam corresponding to an input value of the first function, and the second beam is a beam corresponding to an output value of the first function;
coverage information, wherein the coverage information indicates coverage-related information of the network device;
terminal distribution information, wherein the terminal distribution information indicates a distribution of a plurality of terminals within a coverage area of the network device;
a data collection purpose, wherein the data collection purpose indicates a purpose of data obtained via the first information; or
measurement information, wherein the measurement information comprises relevant information for the terminal to perform measurement based on the first information.

18. The method according to claim 17, wherein the use case comprises at least one of:
a spatial-domain beam prediction case;
a time-domain beam prediction case; or
a spatial-domain beam prediction case and a time-domain beam prediction case.

19. The method according to claim 17, wherein the reference signal resource information comprises at least one of:
a first reference signal resource set, wherein reference signal resources in the first reference signal resource set correspond to the first beam;
a second reference signal resource set, wherein reference signal resources in the second reference signal resource set correspond to the second beam;
a set relationship, wherein the set relationship comprises a relationship between the first reference signal resource set and the second reference signal resource set;
time information corresponding to the first reference signal resource set;
time information corresponding to the second reference signal resource set; or
a time pattern, wherein the time pattern is a pattern of time corresponding to the first reference signal resource set and time corresponding to the second reference signal resource set.

20. The method according to claim 17, wherein the data collection purpose comprises at least one of:
model training;
model inference; or
performance monitoring.

21. The method according to claim 17, wherein the first ID comprises at least one of:
a function ID;
a model ID;
a dataset ID;
a data collection configuration ID;
a data collection ID;
a condition ID; or
an additional condition ID.

22. A terminal, comprising:
a first transceiver module, configured to receive first information sent by a network device; wherein the first information is information corresponding to a first function, the first function is configured to perform beam prediction, and the first function is an artificial intelligence (AI) model and/or an AI function; and
a first processing module, configured to determine an application scope of the first information, the application scope comprising one or more cells; and determine the first function based on the application scope.

23. A network device, comprising:
a second transceiver module, configured to send first information to a terminal, wherein the first information is information corresponding to a first function, the first function is configured to perform beam prediction, and the first function is an artificial intelligence (AI) model and/or an AI function, the terminal determines an application scope of the first information, and determines the first function based on the application scope, the application scope comprising one or more cells.

24. A communication device, comprising:
one or more processors;
wherein the communication device is configured to perform the communication method according to any one of claims 1 to 10 or claims 11 to 21.

25. A storage medium, storing instructions that, when run on a communication device, cause the communication device to implement the communication method according to any one of claims 1 to 10 or claims 11 to 21.

26. A communication system, comprising a terminal, configured to implement the communication method according to any one of claims 1 to 10, and a network device, configured to implement the communication method according to any one of claims 11 to 21.
